# EUROPEAN PATENT SPECIFICATION

(11) **EP 3 047 719 B1**
(45) Date of publication and mention of the grant of the patent: **02.01.2019**
(21) Application number: 16152191.9
(22) Date of filing: 21.01.2016
(51) Int. Cl.: A01D 34/74, A01D 34/82

(54) **CUTTING MODULE**
SCHNEIDMODUL
MODULE DE COUPE

(30) Priority: 26.01.2015 IT FI20150010
(43) Date of publication of application: 27.07.2016
(73) Proprietor: Bernini, Fabrizio, 52021 Bucine - Arezzo (IT)
(72) Inventor: Bernini, Fabrizio, 52021 Bucine - Arezzo (IT)
(74) Representative: Tarabbia, Luigi

(56) References cited:
- EP-A1- 0 490 070
- EP-A1- 2 679 084
- EP-A1- 2 783 563
- DE-A1- 1 901 723
- DE-U1-202010 008 207
- DE-U1-202013 006 712
- US-A- 2 701 943
- US-A- 4 084 395
- US-A1- 2013 086 880

## Description

This invention relates to a cutting module for trimming and cutting the grass of, for example, lawns and uncultivated ground.

More specifically, this invention relates to a cutting module for trimming and cutting grass configured to be installed on board, for example, an automatic self-propelled lawn mower robot.

In further detail, in accordance with this invention, the cutting module is also configured to be installed on board a bush-cutter for gardening activities.

In fact, the cutting module is particularly suitable for cutting grassy borders around flower beds and/or boundary walls in general in gardens or parks.

The expression "uncultivated ground" is used to indicate ground with an even surface, free from tough or woody vegetation such as bushes or shrubs in general whilst the plants with a high trunk may be easily avoided by the cutting module according to this invention.

In the prior art there are self-propelled lawn mower robots and/or manual bush-cutters which have a quite simplified structure. More specifically, the lawn mower robot has a supporting frame comprising wheels located at the ends of the supporting frame and cutting means, typically an electric motor on which a cutting blade is fixed, positioned in a central portion of the frame. Generally speaking, at least one pair of wheels of the lawn mower robot is motorised, to render the robot self-propelled in an automatic and/or assisted manner.

With reference to the manual bush-cutters, there are prior art bush-cutters so as to have a supporting frame which comprise at one end at least one grip and a motor (electric or combustion) and at the opposite end (also with the aim of giving greater equilibrium) cutting means, generally a cutting wire head or a metal blade which replaces the reel of cutting wire for the most heavy duty operations. Example of know self-propelled lawn mower robot and bush-cutter can be found in document DE202010008207U disclosing the features of the preamble of claim 1, US2701943, US2013/0086880 and DE1901723.

In the prior art the self-propelled lawn mower robot, and the bush-cutter, have certain operational shortcomings and some drawbacks, briefly described below. In the case of the self-propelled lawn mower robot, due to the intrinsic structure of the frame it cannot reach completely all the parts of the grass which it trims with the blade, leaving, in fact, stretches of grass which are not cut, for example at the perimeter areas of the frame where the wheels are rested on ground. In other words, the traditional frame of the lawn mower robot is such that it keeps the cutting blade at a certain distance from the outer perimeter, thus preventing adequate cutting of the portion of grass crossed by the wheels, for obvious reasons of interference between the wheels and the blade. An alternative, in order to partly avoid this drawback is to pass the lawn mower robot along a strip of ground alongside the one just cut or to cross over with a trajectory different to the stretch just cut, for example, by means of a dedicated programming for autonomously controlling the lawn mower robot. This alternative operation results in lengthy times and high energy consumption. Another drawback of the prior art self-propelled lawn mower robot is that of not allowing an easy adjustment of the height of cutting the grass, often due to an intrinsic complication of the structure of the lawn mower robot. Moreover, the adjustment of the cutting height often requires the user to perform manual operations on the lawn mower robot which may prove quite risky since it is often necessary to operate with the hands in an area adjacent to the cutting blade. Although the robot must be deactivated during these operations, there is always a risk of injury for the user even with the blade stationary, since it is at least partly exposed. In the case of prior art bush-cutters, one disadvantage is due to the fact that the safety of use of the accessory is very limited since both the metal disk and the cutting wire head and wire must be at least partly exposed (that is, visible by a user) in order to make the cut. This aspect makes the bush-cutter very dangerous if used without the necessary precautions. Prior art bush-cutters are also subject to rapid wear of the cutting components (wire or metal blade), both when fitted with a metal blade and when it is equipped with a cutting wire head. In effect, the cutting wire is usually made of Nylon® which is notoriously a "consumption material" during use of the bush-cutter as it is planned to break after a certain number of cutting cycles due to the continuous stresses against stones or detritus or other obstacles more rigid than the grass. This aspect makes it necessary for the user to make numerous stops to restore the predetermined length of the cutting wire of the bush-cutter or to replace a cracked blade.

Another disadvantage of the prior art bush-cutter is that the cutting height of the grass is never regular and constant because it is performed manually with a cutting element suspended by hand over the grass. This aspect results in unpleasant and unattractive irregularities of the cutting or the risk of uprooting the grass from the ground, pulling directly also the roots, due to the wire or the blade being too close at the base of the grassy stem.

The aim of this invention is to resolve the problems encountered in the prior art by providing a cutting module which can be easily used for trimming and cutting the grass of lawns and ground according to a height desired by the user.

More specifically, the aim of this invention is to make a cutting module which is safe and such as to prevent accidental accidents during its use. A further aim of this invention is to provide a cutting module which allows grassy stems to be cut in an effective and fast manner at the edges of flower beds and boundary walls in general.

These and other aims are substantially achieved by a cutting module for trimming and cutting protuberances on even and continuous surfaces such as, for example, lawns and uncultivated ground, as described in one or more of the appended claims.

Further features and advantages of the present invention are more apparent from the detailed description of a preferred, but non-exclusive, embodiment of a cutting module according to this invention.

The dependent claims correspond to possible embodiments of the invention.

The description is provided below with reference to the accompanying drawings, which are also non-limiting and provided by way of example only, in which:
- Figure 1 is a perspective cutaway view of a cutting module according to this invention;

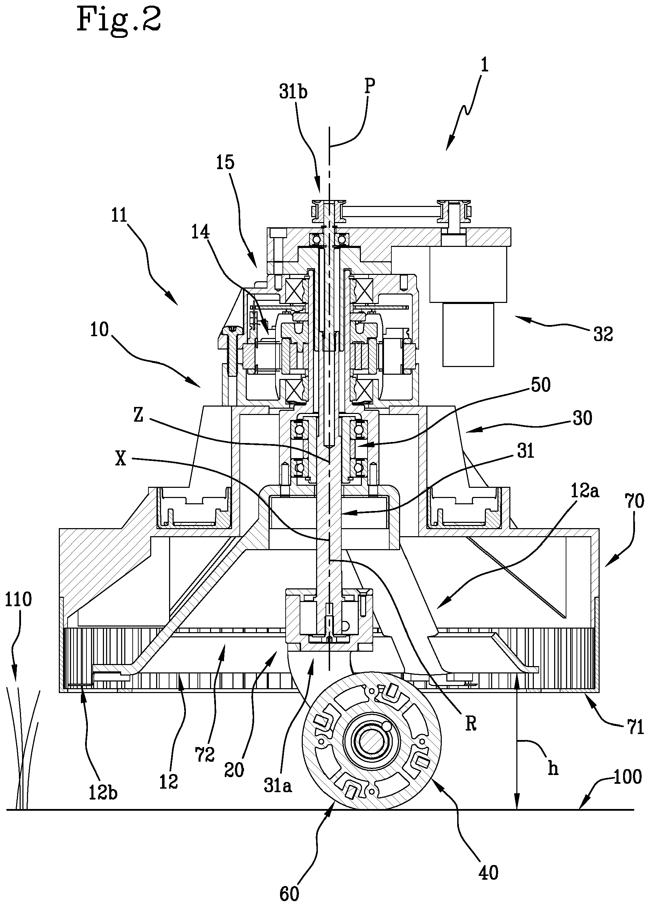

- Figure 2 is a cross section plan view of the cutting module shown in Figure 1;
- Figure 3 is a schematic perspective view of the cutting module of Figure 1 with some parts hidden to make visible others which would otherwise be hidden;
- Figure 3A is a cross section plan view of the cutting module shown in Figure 3;
- Figure 4 is a schematic perspective view of the cutting module of Figure 1 with some parts hidden to make visible others which would otherwise be hidden;
- Figure 5 is a schematic perspective view of the cutting module of Figure 1 with some parts hidden to make visible others which would otherwise be hidden;
- Figure 6A is a schematic perspective view of a self-propelled lawn mower robot with the cutting module of Figure 1 in accordance with an embodiment of this invention;
- Figure 6B is a lateral schematic view of a self-propelled lawn mower robot of Figure 6A with the cutting module of Figure 1;
- Figure 6C is a further perspective schematic view of the self-propelled lawn mower robot with the cutting module of Figure 1;
- Figure 6D is an exploded view of the self-propelled lawn mower robot of Figure 6A with the cutting module of Figure 1;
- Figure 7 is a lateral schematic view of a bush-cutter with the cutting module of Figure 1 in accordance with a different embodiment of this invention.

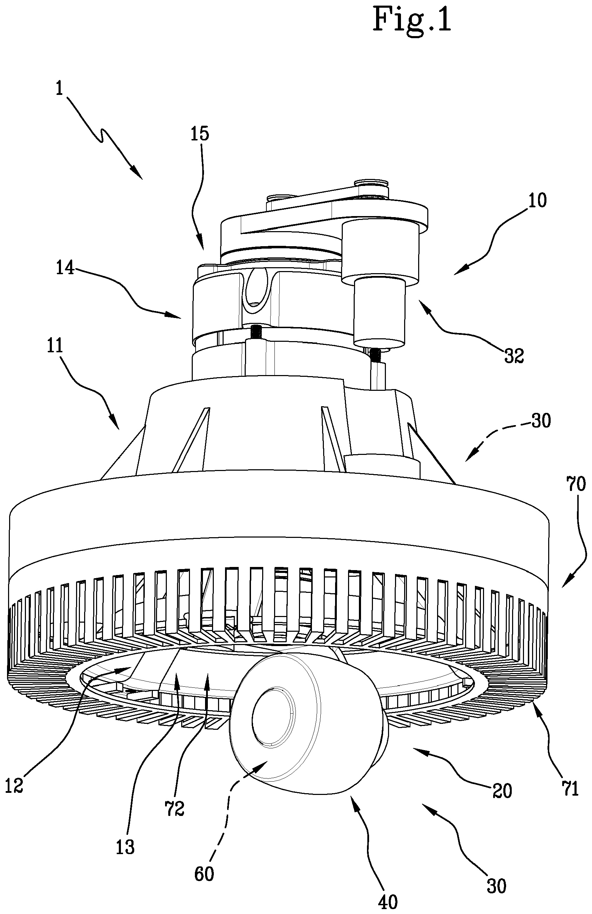

Figure 1 show in its entirety, in a preferred but non-exclusive embodiment in accordance with the inventive concept of this invention, a cutting module 1 for adjusting and cutting the turf on regular and continuous grounds 100, such as, for example, on lawns and uncultivated ground.

The cutting module 1 comprises a supporting structure 10 having cutting means 11 including at least one cutting blade 12 operatively associated with the supporting structure 10.

The cutting means 11 define a cutting area 13 of the cutting module 1, that is to say, an area in which the cutting blade 12 is activated and movable in an operating configuration of the cutting module 1 and in which all the stems 110 of grass after entering the cutting area 13 are cut to size relative to a surface of the ground 100.

In other words, the cutting area 13 comprises at least the area "swept" by the cutting blade 12 in an operating configuration of the cutting module 1. This invention comprises a cutting blade 12 which may have, by way of example, a roto-translational or other type of movement without thus limiting the scope of the invention.

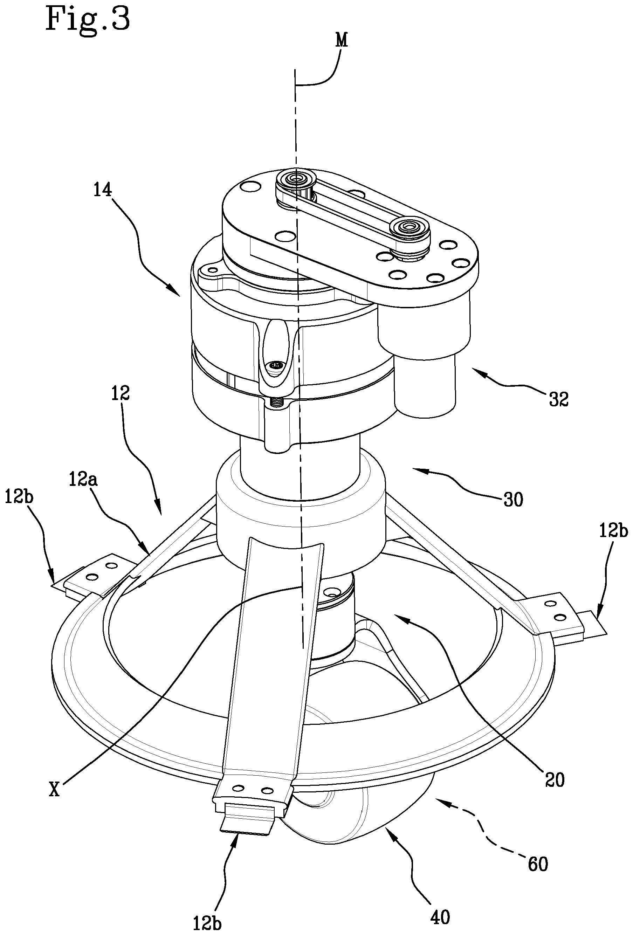

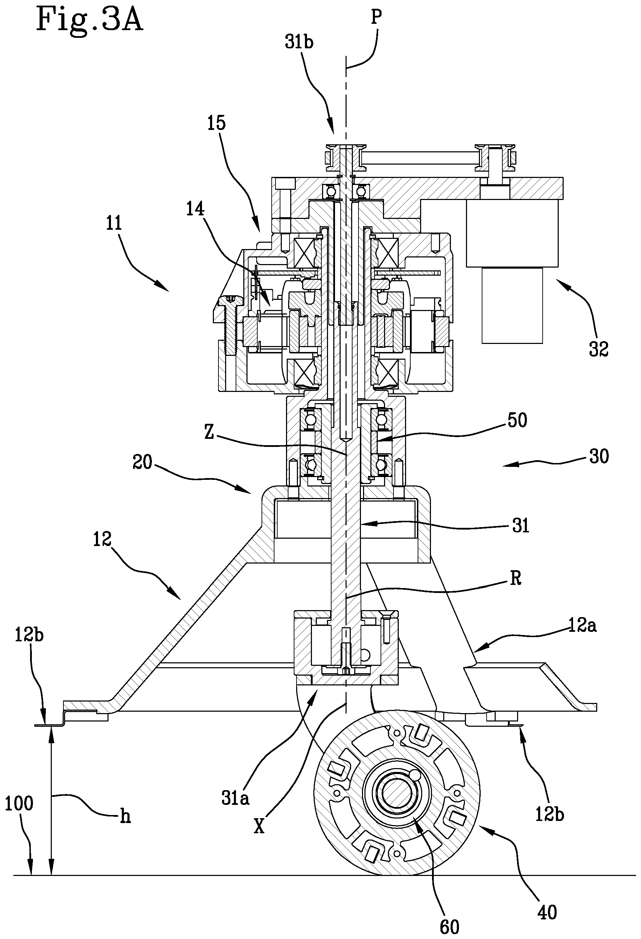

With reference to the accompanying drawings, in particular to Figure 3, the cutting blade 12 is preferably a blade rotating about a relative central axis "X" of rotation.

The cutting blade 12 comprises a supporting body 12a preferably extending in a frustoconical fashion along a direction of extension coinciding with the central axis "X" of rotation. Preferably, the supporting body 12a comprises a plurality of inclined reinforcements which extend from a central and upper portion to connect to a lower portion diametrically away from the central axis "X" of rotation.

The cutting blade 12 has at least one cutting portion 12b, by way of example having the form of a rectangular nosepad positioned in a peripheral portion of the supporting body 12a (see the detail in Figure 3). Preferably, the cutting blade 12 comprises three cutting portions 12b angularly spaced by 120° about the central axis "X" on a plane perpendicular to the central axis "X". The cutting portions 12b are configured for defining an ideal cutting line which is circular and centred relative to the central axis "X" of rotation of the cutting blade 12. According to this invention, the cutting blade 12 is driven by an electric motor 14 fixed to the supporting structure 10 and/or to the cutting means 11.

Preferably, the electric motor 14 has a relative axis of rotation "M" coinciding with the central axis "X" of rotation of the cutting blade 12.

In other words, the electric motor 14 is coaxial with the central axis "X" of rotation of the cutting blade 12 and preferably the cutting blade 12 is directly fitted on the electric motor 14.

The cutting module 1 also comprises means 20 for resting on the ground 100 operatively associated with the supporting structure 10. Advantageously, in accordance with the inventive concept of this invention, the cutting module 1 has the above-mentioned resting means 20 located inside the cutting area 13.

In other words, the supporting means 20 are configured at least to support the cutting module 1 and are positioned inside the area "swept" by the cutting blade 12 of the cutting module 1.

Preferably, the cutting blade 12 rotates around the central axis "X" of rotation and the supporting means 20 are positioned centrally with respect to the above-mentioned central axis "X". Further details are provided in the description.

Moreover, the cutting module 1 comprises means 30 for adjusting a cutting a height "h" configured to vary a distance "h" between the cutting blade 12 and the surface of ground 100 on which the resting means 20 rest.

Preferably, the adjusting means 30 are positioned inside the cutting area 13 defined above. More specifically, the supporting means 20 comprise the adjusting means 30, thus the adjusting means 30 inherit an arrangement, at least partly, of the supporting means 20 which are positioned inside the cutting area 13, as described above.

Preferably, in particular with reference to Figure 3A, the adjusting means 30 comprise a telescopic shaft 31 having a portion 31a associated with an element 40 for moving the resting means 20 selected from a swivel wheel and/or a sliding block and/or a tracked carriage, and a further portion 31b associated with the supporting structure 10 and/or cutting means 12. In other words, the movement element 40 of the resting means 20 allows a movement/translation of the cutting module 1 along a portion of the surface of the ground 100 in an operating configuration of the cutting module 1. Preferably, the movement element 40 comprises a swivel wheel.

Preferably, the portion 31a and the further portion 31b of the telescopic shaft 31 are slidably coupled to each other along respective coincident axes of symmetry "P", "R" to allow a relative translational movement between the adjusting means 30 and the cutting means 11, in particular between the movement element 40 and the cutting means 11.

More specifically, the cutting module 1 comprises at least one sleeve 50 interposed between the telescopic shaft 31 and the cutting means 11.

In effect, since the cutting blade 12 rotates around the central axis "X" and the supporting means 20 are centred relative to the axis "X" and the adjusting means 30 are associated to the supporting means 20 (in particular to the movement element 40), it follows that the adjusting means 30, in particular the telescopic shaft 31, are coaxial with the central axis "X" of rotation of the cutting means 11.

Preferably, the telescopic shaft 31 and at least the sleeve 50 have respective axes of symmetry "P", "Z" coaxial relative to the central axis "X" of rotation of the cutting blade 12.

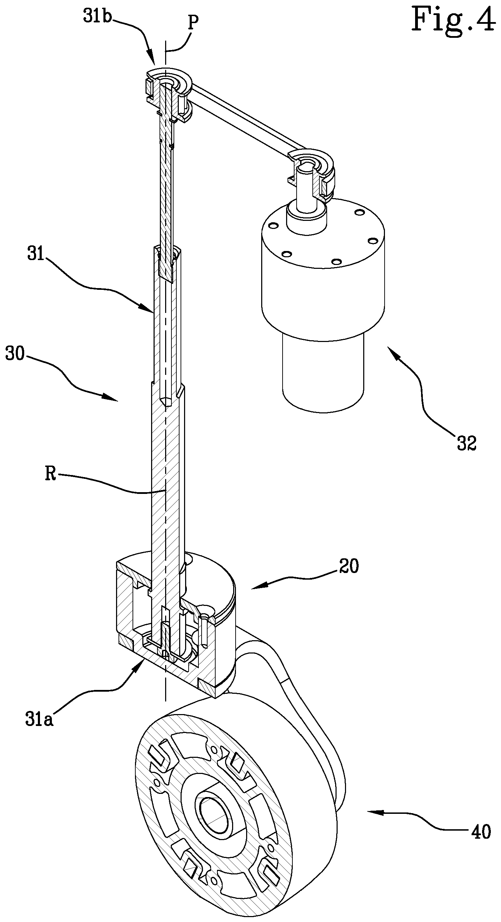

The adjusting means 30 described above comprise an electric motor 32 connected by a power transmission to the further portion 31b of the telescopic shaft 31, for example, the electric motor 32 is connected by a flexible transmission belt between the pinion of the electric motor 32 and the drive pulley keyed onto the telescopic shaft 31. An example of the above-mentioned connection is illustrated by way of example in Figure 4. The portion 31a of the telescopic shaft 31 is configured in such a way as to convert and transmit a movement of rotation of the telescopic shaft 31 into the above-mentioned relative translational movement between the adjusting means 30 and the cutting means 11.

Preferably, the further portion 31b of the telescopic shaft 31 is shaped at least partly with a helical groove whilst the portion 31a of the telescopic shaft has a cavity designed to receive the helical groove, by way of example like a lead nut and screw coupling.

The cutting module 1 comprises drive means 60 and in particular the movement element 40 is associated with the above-mentioned drive means 60.

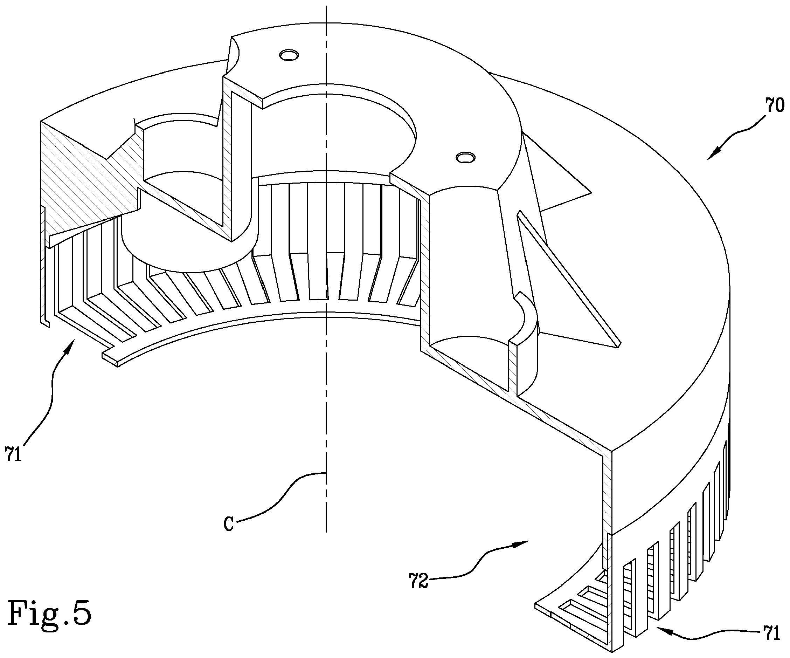

Preferably, the drive means 60 comprise an electric motor (not illustrated) for driving a carriage with fixed wheels and/or a swivel wheel and/or a tracked carriage which are operatively associated with the movement element 40 in an operating configuration for using the cutting module 1. The cutting module 1 also comprises a protective guard 70 configured to define an operating space of the cutting means 11 inside of which the cutting blade 12 is movable in an operating configuration for using the cutting module 1. A sectional view of the guard 70 is illustrated by way of example in Figure 5.

Advantageously, the protective guard 70 has a plurality of slotted openings 71 to allow the entry of a stem 110 of grass or other plant inside the operating space, in an operating configuration for using the cutting module 1.

Advantageously, the guard 70 is configured to wrap around and protect the cutting portions 12b of the cutting blade 12 by means of a portion of the structure encircling the cutting blade 12 along the perimeter and which the wraps around it partly in the front.

For this reason, the plurality of slotted openings 71 allow the passage of the stems and shafts of the turf and do not allow the passage of other bodies different to the grass.

In other words, as illustrated by way of a non-limiting example in Figure 5, the guard 70 has a first portion which is wrapped around the perimeter of the cutting blade 12 and a second portion which extends radially towards the centre of the cutting blade 12, that is, towards the central axis "X" of the cutting module 1. The second portion of the protective guard 70 is substantially an annular portion positioned parallel to a rotation plane of the cutting blade 12 which has the plurality of slotted openings 71 arranged radially and converging towards the central axis "X" of rotation and an opening with predetermined dimensions at the central axis "X" of rotation of the blade 12.

In this way, the cutting module 1, as well as allowing a safe use for the user, has a long service life of the elements which are notoriously more subject to wear such as, for example, the cutting blades.

In effect, the cutting module 1 protects the blade 12 from accidental contact with objects which are foreign to the turf (for example stony detritus, small scrap items or dry wood) which could damage the cutting portions 12b, thus adversely affecting the cutting efficiency and/or the adjusting precision of the turf.

Moreover, the protective guard 70 and the plurality of slotted openings 71 are configured in such a way as not to allow the passage of a part of the body of a user such as the fingers of a hand and to prevent any type of contact with the cutting portions 12b of the cutting blade 12, both when the latter is in rotation and when stationary.

The protective guard 70 also has a frustoconical shape with a lower opening 72 designed to contain at least the cutting blade 12.

The protective guard 70 has a respective axis of symmetry "C" coaxial with the central axis "X" of rotation of the cutting blade 12, in an operating configuration of the cutting module 1.

Preferably, in accordance with the inventive concept of this invention, the protective guard 70 is integral with the supporting structure 10 of the module 1. By way of example, the guard 70 may be made in one piece with the supporting structure 10 by injection moulding of a plastic material. In further detail, the cutting head 1 has on the supporting structure 10 a connecting portion 15 reversibly connectable to a portion of a frame of an automatic lawn mower robot (200) and to a structure for a manual bush-cutter 300.

Advantageously, the cutting module 1 in accordance with this invention can be installed on a structure for a self-propelled robot 200 for cutting grass, or on a guiding and supporting structure for a bush-cutter 300. Preferably, the connecting portion 15 comprises a flanged portion (not illustrated) configured to make a reversible constraint.

Advantageously, this invention relates to a cutting module 1 which can be easily installed on/removed from a self-propelled lawn mower robot 200 or a structure for bush-cutter 300.

The cutting module 1 comprises at least one management module and/or a power supply battery and/or a module for charging the battery (not illustrated in the accompanying drawings) configured to manage the drive of the cutting blade 12. The battery in one embodiment of this invention is connected to the cutting module 1 by electric/electronic wiring (not illustrated).

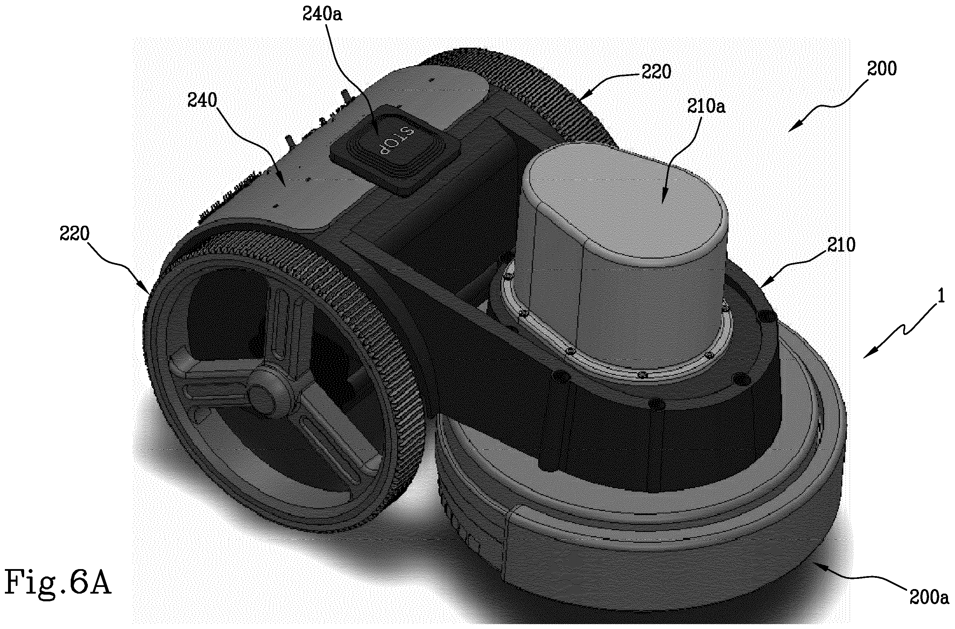

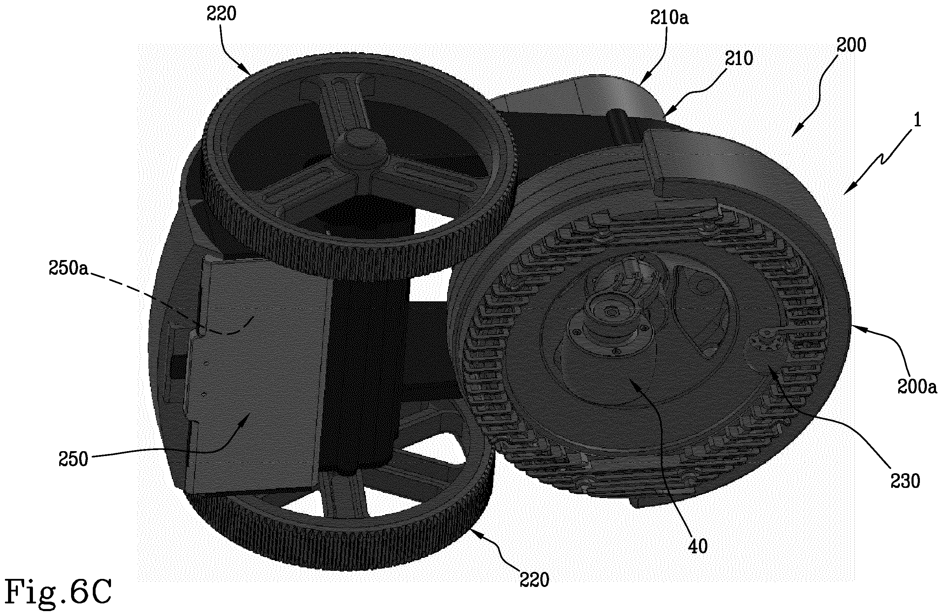

In accordance with the inventive concept of this invention, Figures 6A-6D define a lawn mower robot 200 for adjusting grassy borders and cutting grass comprising at least one frame 210 comprising at least two supporting wheels 220 and the cutting module 1 described above.

Preferably, the lawn mower robot 200 has the cutting module 1 positioned at a front end 200a of the lawn mower robot 200 relative to the predetermined direction of movement of the lawn mower robot 200, in an operating configuration of the lawn mower robot 200.

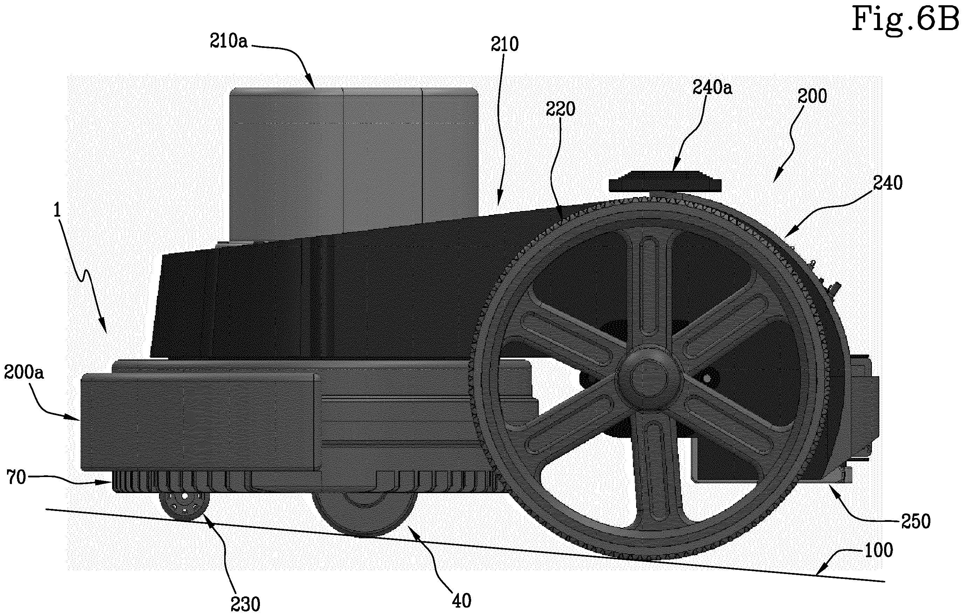

Preferably, the robot 200 comprises three points for resting on the ground 100 of which two resting points comprise the resting wheels 220 of the frame 210 and a third resting point comprises a carriage with fixed wheels and/or a swivel wheel and/or a tracked carriage of the movement element 40. In addition, the robot 200 also comprises a further resting element 230 configured to rest on the ground 100 when there are steep slopes or uneven stretches during the advance of the robot 100. Preferably, the further resting unit 230 is reversibly fixed to a portion of the cutting module 1, still more preferably the further resting unit 230 is fixed to the protective guard 70 of the cutting module 1. In other words, the robot 200 during normal operation substantially has three resting points, that is to say, the two wheels 220 and the movement element 40 of the cutting module 1. To prevent any sticking of the protective guard casing 70 into the ground 100 if the ground is particularly uneven, the robot 200 has a further resting element 230, as illustrated by way of example and without limiting the scope of the invention in Figure 6B. The further supporting element 230 may comprise a swivel wheel, a runner, a tracked element or other similar elements.

In an embodiment included in the inventive concept of this invention, not illustrated in the accompanying drawings, the further resting element 230 is reversibly fixed to a portion of the frame 210, preferably the further resting element 230 being reversibly fixed to the frame 210 at the front end 220a.

In the preferred embodiment, the robot 200 comprises a protective guard 210a at least for the upper portion of the cutting module 1, preferably at the connection portion 15 of the cutting module 1.

Preferably, the lawn mower robot 200 comprises a management module 240 and a power supply battery 250. The management module 240 comprises a control unit (not illustrated) configured for managing the functions of the robot 200 both when moving and resting, during recharging of the battery 250.

Preferably, the battery 250 is of the rechargeable type and it can be replaced by inserting/extracting it from the frame 210 of the robot 200 through a housing compartment 250a set up with a door.

In the preferred embodiment the management module 240 also comprises a pushbutton 240a positioned clearly in view on the outer casing of the robot 200, in such a way as to be easily reached. The pushbutton 240a may be a normal on/off pushbutton or merely an emergency pushbutton. Preferably, the management module 240 is configured to recharge the battery 250 by magnetic induction.

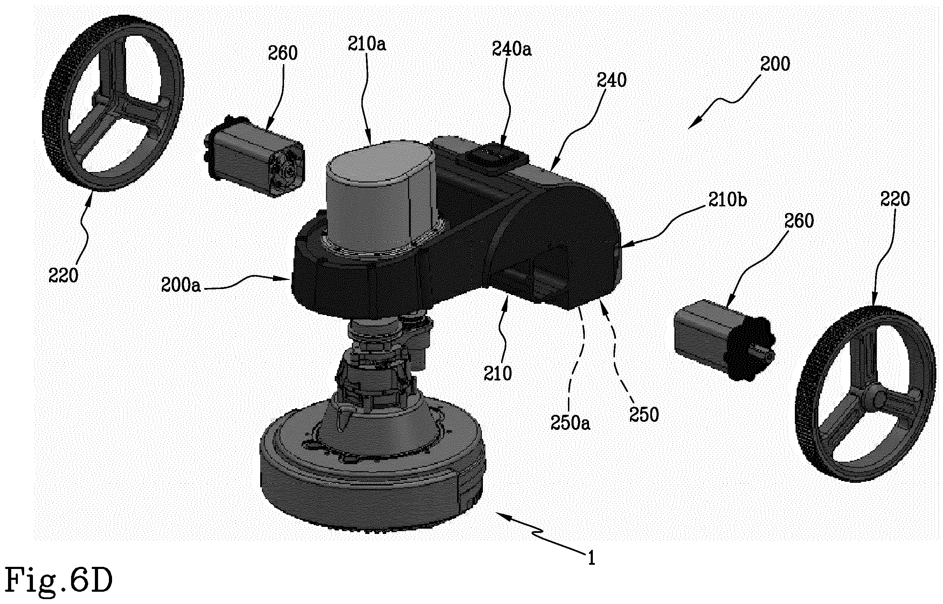

The lawn mower robot 200 comprises electric motors 260 respectively connectable to the wheels 220. The frame 210 is configured in such a way as to house the electric motors 260 in respective housing compartments 210b, as illustrated by way of a non-limiting example in Figure 6D.

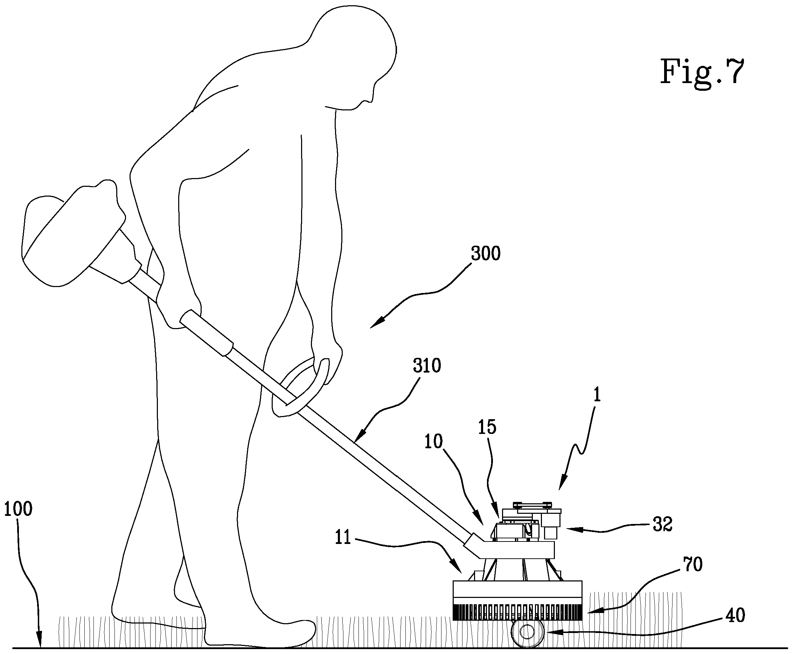

The lawn mower robot 200 also comprises a device for charging the battery (not illustrated) configured to manage at least the drive of the cutting blade 12 and/or the movement element 40 of the cutting module 1. The inventive concept of this invention defines a bush-cutter 300 for adjusting grassy borders and cutting grass comprising a cutting module 1 described above and at least a supporting structure 310 comprising at one end at least one grip for a user and at an opposite end coupling means designed for fixing the connecting portion of the cutting module 1. By way of a non-limiting example, the bush-cutter 300 comprising the cutting module 1 is illustrated in Figure 7.

The bush-cutter 300 also comprises fastening means (not illustrated) for a management module and/or a power supply battery and/or a device for recharging the battery (not illustrated) configured to manage the drive of the cutting blade 12 of the cutting module 1.

This invention fulfils the preset aims.

Advantageously, the cutting module according to this invention allows complete and precise cutting also around containing walls, flower beds and about plants with a high trunk.

Advantageously, the cutting module described herein is self-supporting by means of the supporting means which are coaxial with the blade without undergoing any interference between them; in other words, the cutting height can be adjusted at any time in an operating configuration of the cutting module regardless of whether the drive is active or not and/or the steady state regime of the rotary blade.

Advantageously, the cutting module according to the invention lends itself to installation on board a structure for fitting to a self-propelled lawn mower robot or on a bush-cutter structure for gardening activities. Advantageously, in the case of a self-propelled lawn mower robot which comprises the cutting module described above, it is possible to trim the edge of grass around an obstacle in a single operation and movement, unlike a prior art lawn mower robot in which the trajectory of advance must generally must be corrected several times in such a way as to always have the obstacle close to a portion closest to the cutting blade. The cutting module according to this invention allows a uniform cut of the turf to made at 360° relative to the axis of rotation of the cutting blade, cutting the turf along any feed direction it is moving along simultaneously. Advantageously, the cutting module according to this invention makes it possible to have a compact, efficient and safe adjusting system, especially because the structure of the module and the internal mechanics are configured to allow compliance with all the insulation and safety regulations specified for electrical devices which are configured for working outdoors, and therefore also in contact with water and humidity. Advantageously, the cutting module according to this invention simultaneously comprises means for adjusting the height of the cut as well as a protective guard which does not leave portions of blade uncovered, therefore very safe, and at the same time allows cutting through 360° about the rotary blade.

Advantageously, in the case of a bush-cutter comprising the cutting module described above, the above-mentioned bush-cutter is safer and more precise when cutting; moreover, it does not generate friction and the known condition of wear following contact between the ground and the cutting wire head as occurs with prior art bush-cutters. In this invention there is no longer the presence of a cutting wire but a rotary blade which is more resistant and above all protected by a guard which simultaneously allows cutting in any direction of travel of the bush-cutter on the ground. Moreover, the bush-cutter comprising the cutting module described above makes it possible to be at least partly self-supporting by means of the resting means and to guarantee a clean and precise cut in any conditions and with any dimensions of the garden or lawn.

Advantageously, the cutting robot according to this invention has a modular structure which is easy to assemble/disassemble in the case of replacement of parts and/or maintenance of the robot.

Advantageously, the cutting module according to this invention can be installed on a bush-cutter or on a self-supporting frame of a lawn mower robot without any impediment without the need for modifications and/or separate parts for its assembly.

Advantageously, the robot according to this invention operates on any type of ground, also considerably uneven and/or with a steep slopes, which prior art robots are generally unable to deal with autonomously.

## Claims

1. A cutting module (1) for trimming and cutting the turf of the ground (100), comprising:
- a supporting structure (10);
- cutting means (11) having at least one cutting blade (12) which is operatively associated with the supporting structure (10) and defining a cutting area (13) of the cutting module (1);
- means (20) for resting on the ground (100) which is operatively associated with the supporting structure (10);
the resting means (20) are positioned inside the cutting area (13) and wherein the cutting blade (12) is driven by a motor (14) fixed to the supporting structure (10) and/or to the cutting means (11), the cutting module (1) being configured in such a way as to allow a contact of the cutting blade (12) only with the turf and prevent a contact of the blade (12) with every extraneous object, wherein said cutting module (1) further comprises a protective guard (70) configured to define an operating space of the cutting means (11) inside of which the cutting blade (12) is movable in an operating configuration for using the cutting module (1), **characterised in** the motor (14) having its own axis of rotation (M) coinciding with a central axis of rotation (X) of the cutting blade (12), and **in that** the protective guard (70) has a first portion in such a way as to wrap around the perimeter of the cutting blade (12) and a second portion such as to extend radially towards the centre of the cutting blade (12) between the cutting blade (12) and the ground (100), the first portion and the second portion of the protective guard (70) have a plurality of slotted openings (71) to allow the entry of a stem (110) of grass or other plant inside the operating space in an operating configuration for using the cutting module (1).

2. The cutting module (1) according to claim 1, wherein the cutting blade (12) is rotating about a central axis of rotation (X) and wherein the resting means (20) are arranged centrally with respect to the central axis (X).

3. The cutting module (1) according to either of claims 1-2, comprising means (30) for adjusting a cutting height configured to vary a distance (h) between the cutting blade (12) and a surface of ground (100) on which the resting means (20) rest, and wherein the adjusting means (30) are arranged inside the cutting area (13).

4. The cutting module (1) according to claim 3, wherein the resting means (20) comprise the adjusting means (30).

5. The cutting module (1) according to claim 4, wherein the adjusting means (30) comprise a telescopic shaft (31) having a portion (31a) associated with an element (40) for moving the resting means (20) selected from a swivel wheel and/or a sliding block and/or a tracked carriage, and a further portion (31b) associated with the supporting structure (10) and/or cutting means (11), the portion (31a) and further portion (31b) of the telescopic shaft (31) being slidingly coupled together along respective coincident axes of symmetry (P, R) to allow a relative translational movement between the adjusting means (30) and the cutting means (12).

6. The cutting module (1) according to claim 5, wherein the rotating blade (12) is rotating about a central axis (X) and the telescopic shaft (31) is coaxial with the central axis (X) of the cutting means (12), wherein the cutting module (1) comprises at least one sleeve (50) interposed between the telescopic shaft (31) and the cutting means (12).

7. The cutting module (1) according to claim 6, wherein the telescopic shaft (31) and the at least one sleeve (50) have respective axes of symmetry (P, R) which are coaxial with respect to the central axis of rotation (X) of the cutting blade (12).

8. The cutting module (1) according to claim 2, wherein the cutting blade (12) comprises a supporting body (12a) preferably with frustoconical extension along a direction of extension which coincides with the central axis of rotation (X), the cutting blade (12) comprising at least one cutting portion (12b) arranged in a peripheral portion of the supporting body (12a).

9. The cutting module (1) according to claim 5, wherein the adjusting means (30) comprise an electric motor (32) connected by means of a power drive system to the further portion (31b) of the telescopic shaft (30) of the adjusting means (30), and wherein the portion (31a) of the telescopic shaft (30) is configured so as to convert and transmit a rotational movement of the telescopic shaft (31) in the relative translational movement between the adjusting means (30) and the cutting means (12).

10. The cutting module (1) according to claim 5, comprising drive means (60) and wherein the movement element (40) is associated with the drive means (60), the drive means (60) preferably comprising an electric motor for driving a carriage with fixed wheels and/or a swivel wheel and/or a tracked carriage which are operatively associated with the movement element (40) in an operating configuration for using the cutting module (1).

11. The cutting module (1) according to any one of claims 1-10, wherein the protective guard (70) is integral with the supporting structure (10).

12. The cutting module (1) according to any one of claims 1-11, wherein the supporting structure (10) has a connecting portion (15) which can be reversibly fastened to a portion of a frame (210) of an automatic lawn mower robot (200) or to a portion (310) of a manual bush-cutter (300), the supporting structure (10) of the cutting means (12) preferably having a flanged connection portion (15) designed to form a reversible connection.

13. A lawn mower robot (200) for trimming grassy borders and for cutting turf, comprising at least:
- a frame (210) comprising at least two supporting wheels (220);
- a cutting module (1) described in claims 1-14.

14. The lawn mower robot (200) according to claim 13, wherein the cutting module (1) is arranged at a front end (200a) of the lawn mower robot (200) with respect to the predetermined advancing direction and sense of the lawn mower robot (200) in an operating configuration for using the lawn mower robot (200).

15. The lawn mower robot (200) according to claim 13 or 14, comprising three points (220, 230) for resting on a surface of ground (100), wherein two resting points comprise the resting wheels (220) of the frame (210) and a third resting point (230) comprises a carriage with fixed wheels and/or a swivel wheel and/or a tracked carriage of the movement element (40).

16. The lawn mower robot (200) according to any one of claims 13-15, comprising a further resting element (230) configured to prevent jamming of the cutting module (1) with the ground (100), the further resting element (230) being reversibly fixed to a portion of the cutting module (1), preferably the further resting element (230) being fixed to the guard (70).

17. The lawn mower robot (200) according to any one of claims 13-15, comprising a further resting element (230) configured to prevent jamming of the cutting module (1) with the ground (100), the further resting element (230) being reversibly fixed to a portion of the frame (210) of the robot (200), preferably the further resting element (230) being reversibly fixed to the frame (210) at the front end (220a).

## Patentansprüche

1. Schneidmodul (1) zum Nachschneiden und Schneiden von Rasen auf dem Boden (100), umfassend:
- eine Halterungsstruktur (10);
- Schneidmittel (11), aufweisend mindestens ein Schneidmesser (12), das betriebswirksam mit der Halterungsstruktur (10) assoziiert ist und einen Schneidbereich (13) des Schneidmoduls (1) definiert;
- Mittel (20) zur Auflage auf dem Boden (100), die betriebswirksam mit der Halterungsstruktur (10) assoziiert sind,
wobei die Auflagemittel (20) im Schneidbereich (13) positioniert sind und wobei das Schneidmesser (12) von einem Motor (14) angetrieben wird, fixiert an der Halterungsstruktur (10) und/oder den Schneidmitteln (11), wobei das Schneidmodul (1) so ausgelegt ist, dass es einen Kontakt des Schneidmessers (12) nur mit dem Rasen erlaubt und einen Kontakt des Messers (12) mit jedem Fremdkörper vermeidet, wobei das Schneidmodul (1) zudem eine Schutzvorrichtung (70) umfasst, die ausgelegt ist, um einen Betriebsbereich der Schneidmittel (11) zu definieren, in dem das Schneidmesser (12) in einer Betriebskonfiguration zur Nutzung des Schneidmoduls (1) bewegbar ist, **dadurch gekennzeichnet, dass** der Motor (14) seine eigene Rotationsachse (M) aufweist, die mit einer mittigen Rotationsachse (X) des Schneidmessers (12) übereinstimmt, und dadurch, dass die Schutzvorrichtung (70) einen ersten Abschnitt aufweist, sodass dies dieser rund um den Umfang des Schneidmessers (12) wickelt, und einen zweiten Abschnitt, sodass sich dieser radial hinführend zur Mitte des Schneidmessers (12) zwischen dem Schneidmesser (12) und dem Boden (100) erstreckt, wobei der erste Abschnitt und der zweite Abschnitt der Schutzvorrichtung (70) eine Vielzahl an genuteten Öffnungen (71) aufweisen, um den Eintritt eines Grashalms (110) oder des Stiels einer anderen Pflanze in den Betriebsbereich in einer Betriebskonfiguration zur Nutzung des Schneidmoduls (1) zu ermöglichen.

2. Schneidmodul (1) nach Anspruch 1, wobei sich das Schneidmesser (12) um eine mittige Rotationsachse (X) dreht und wobei die Auflagemittel (20) mittig gegenüber der mittigen Achse (X) angeordnet sind.

3. Schneidmodul (1) nach einem der Anspruche 1-2, umfassend Mittel (30) zum Einstellen einer Schneidhöhe, ausgelegt, um den Abstand (h) zwischen dem Schneidmesser (12) und einer Bodenoberfläche (100) zu variieren, auf dem die Auflagemittel (20) ruhen, und wobei die Einstellmittel (30) im Schneidbereich (13) angeordnet sind.

4. Schneidmodul (1) nach Anspruch 3, wobei die Auflagemittel (20) die Einstellmittel (30) umfassen.

5. Schneidmodul (1) nach Anspruch 4, wobei die Einstellmittel (30) eine Teleskopwelle (31) umfassen, aufweisend einen Abschnitt (31a), assoziiert mit einem Element (40) zum Bewegen der Auflagemittel (20), ausgewählt aus einem Schwenkrad und/oder einem Gleitblock und/oder einem auf Führungen verfahrenden Wagen, und einen weiteren Abschnitt (31b), assoziiert mit der Halterungsstruktur (10) und/oder Schneidmitteln (11), wobei der Abschnitt (31a) und der weitere Abschnitt (31b) der Teleskopwelle (31) verschiebbar miteinander entlang jeweiliger übereinstimmender Symmetrieachsen (P, R) gekuppelt sind, um eine relative Verschiebebewegung zwischen den Einstellmitteln (30) und den Schneidmitteln (12) zu erlauben.

6. Schneidmodul (1) nach Anspruch 5, wobei sich das rotierende Messer (12) um eine mittige Achse (X) dreht und die Teleskopwelle (31) koaxial zur mittigen Achse (X) der Schneidmittel (12) angeordnet ist, wobei das Schneidmodul (1) mindestens eine Hülse (50) umfasst, die zwischen der Teleskopwelle (31) und den Schneidmitteln (12) eingesetzt ist.

7. Schneidmodul (1) nach Anspruch 6, wobei die Teleskopwelle (31) und die mindestens eine Hülse (50) jeweilige Symmetrieachsen (P, R) aufweisen, die koaxial zur mittigen Rotationsachse (X) des Schneidmessers (12) angeordnet sind.

8. Schneidmodul (1) nach Anspruch 2, wobei das Schneidmesser (12) einen Halterungskörper (12a) umfasst, vorzugsweise mit kegelstumpfförmiger Ausdehnung entlang einer Ausdehnungsrichtung, die mit der mittigen Rotationsachse (X) übereinstimmt, wobei das Schneidmesser (12) mindestens einen Schneidabschnitt (12b) umfasst, der in einem umfangseitigen Abschnitt des Halterungskörpers (12a) angeordnet ist.

9. Schneidmodul (1) nach Anspruch 5, wobei die Einstellmittel (30) einen Elektromotor (32) umfassen, verbunden mittels eines Motorantriebssystems mit dem weiteren Abschnitt (31b) der Teleskopwelle (30) der Einstellmittel (30), und wobei der Abschnitt (31a) der Teleskopwelle (30) so ausgelegt ist, dass er eine Drehbewegung der Teleskopwelle (31) in die relative Verschiebebewegung zwischen den Einstellmitteln (30) und den Schneidmitteln (12) umwandelt und überträgt.

10. Schneidmodul (1) nach Anspruch 5, umfassend Antriebsmittel (60), und wobei das Bewegungselement (40) mit den Antriebsmitteln (60) assoziiert ist, wobei die Antriebsmittel (60) vorzugsweise einen Elektromotor umfassen, um einen Wagen mit fixen Rädern und/oder einem Schwenkrad und/oder einen auf Führungen verfahrenden Wagen anzutreiben, die betriebswirksam mit dem Bewegungselement (40) in einer Betriebskonfiguration zur Nutzung des Schneidmoduls (1) assoziiert sind.

11. Schneidmodul (1) nach einem der Ansprüche 1-10, wobei die Schutzvorrichtung (70) fest mit der Halterungsstruktur (10) verbunden ist.

12. Schneidmodul (1) nach einem der Ansprüche 1-11, wobei die Halterungsstruktur (10) einen Verbindungsabschnitt (15) aufweist, der reversibel an einem Abschnitt eines Rahmens (210) eines automatischen Rasenmäherroboters (200) oder einem Abschnitt (310) eines manuellen Heckenschneiders (300) befestigt werden kann, wobei die Halterungsstruktur (10) der Schneidmittel (12) vorzugsweise einen Flanschverbindungsabschnitt (15) aufweist, der ausgestaltet ist, um eine reversible Verbindung zu bilden.

13. Rasenmäherroboter (200) zum Zuschneiden von Graskanten und zum Schneiden von Rasen, umfassend mindestens
- einen Rahmen (210), umfassend mindestens zwei Halterungsräder (220);
- ein Schneidmodul (1) beschrieben in Anspruch 1-14.

14. Rasenmäherroboter (200) nach Anspruch 13, wobei das Schneidmodul (1) an einem frontseitigen Ende (200a) des Rasenmäherroboters (200) im Vergleich zur vorgegebenen Fahrrichtung und Ausrichtung des Rasenmäherroboters (200) in einer Betriebskonfiguration zur Nutzung des Rasenmäherroboters (200) angeordnet ist.

15. Rasenmäherroboter (200) nach Anspruch 13 oder 14, umfassend drei Punkte (220, 230) zur Auflage auf einer Bodenoberfläche (100), wobei zwei Auflagepunkte die Auflageräder (220) des Rahmens (210) umfassen und ein dritter Auflagepunkt (230) einen Wagen mit fixen Rädern und/oder einem Schwenkrad und/oder einen auf Führungen verfahrenden Wagen des Bewegungselements (40) umfasst.

16. Rasenmäherroboter (200) nach einem der Ansprüche 13-15, umfassend ein weiteres Auflageelement (230), ausgelegt, um das Verklemmen des Schneidmoduls (1) mit dem Boden (100) zu vermeiden, wobei das weitere Auflageelement (230) reversibel an einem Abschnitt des Schneidmoduls (1) fixiert ist, wobei das weitere Auflageelement (230) vorzugsweise an der Schutzvorrichtung (70) fixiert ist.

17. Rasenmäherroboter (200) nach einem der Ansprüche 13-15, umfassend ein weiteres Auflageelement (230), ausgelegt, um das Verklemmen des Schneidmoduls (1) mit dem Boden (100) zu vermeiden, wobei das weitere Auflageelement (230) reversibel an einem Abschnitt des Rahmens (210) des Roboters (200) fixiert ist, wobei das weitere Auflageelement (230) vorzugsweise reversibel am Rahmen (210) am frontseitigen Ende (220a) fixiert ist.

## Revendications

1. Module de coupe (1) pour tailler et pour couper le gazon sur le terrain (100), comprenant :
- une structure de support (10) ;
- des moyens de coupe (11) avec au moins une lame de coupe (12) opérationnellement associée à la structure de support (10) et définissant une zone de coupe (13) du module de coupe (1) ;
- des moyens (20) d'appui sur le terrain (100) opérationnellement associés à la structure de support (10) ;
les moyens d'appui (20) sont positionnés à l'intérieur de la zone de coupe (13), et dans lequel la lame de coupe (12) est entraînée par un moteur (14) fixé à la structure de support (10) et/ou aux moyens de coupe (11), le module de coupe (1) étant configuré de sorte à permettre un contact de la lame de coupe (12) uniquement avec le gazon et à empêcher un contact de la lame (12) avec tout objet étranger, dans lequel ledit module de coupe (1) comprend également une protection (70) configurée pour définir une zone opérationnelle des moyens de coupe (11) à l'intérieur de laquelle la lame de coupe (12) peut se déplacer dans une configuration opérationnelle d'utilisation du module de coupe (1), **caractérisé en ce que** le moteur (14), ayant son propre axe de rotation (M) coïncidant avec un axe central de rotation (X) de la lame de coupe (12), et **en ce que** la protection (70) présente une première partie configurée pour envelopper le périmètre de la lame de coupe (12) et une seconde partie configurée pour se développer radialement vers le centre de la lame de coupe (12) entre la lame de coupe (12) et le terrain (100), la première partie et la seconde partie de la protection (70) ont une pluralité d'ouvertures fendues (71) pour permettre l'entrée d'une tige (110) d'herbe ou d'une autre plante à l'intérieur de la zone opérationnelle dans une configuration opérationnelle d'utilisation du module de coupe (1).

2. Module de coupe (1) selon la revendication 1, dans lequel la lame de coupe (12) tourne autour d'un axe central de rotation (X) et dans lequel les moyens d'appui (20) sont disposés centralement par rapport à l'axe central (X).

3. Module de coupe (1) selon l'une quelconque des revendications 1-2, comprenant des moyens (30) de réglage d'une hauteur de coupe configurés pour modifier une distance (h) entre la lame de coupe (12) et une surface de terrain (100) sur laquelle les moyens d'appui (20) se trouvent, et dans lequel les moyens de réglage (30) sont disposés à l'intérieur de la zone de coupe (13).

4. Module de coupe (1) selon la revendication 3, dans lequel les moyens d'appui (20) comprennent les moyens de réglage (30).

5. Module de coupe (1) selon la revendication 4, dans lequel les moyens de réglage (30) comprennent un arbre télescopique (31) ayant une partie (31a) associée à un élément (40) de déplacement des moyens d'appui (20), sélectionné entre une roue pivotante et/ou un coulisseau et/ou un chariot chenillé, et une partie complémentaire (31b) associée à la structure de support (10) et/ou aux moyens de coupe (11), la partie (31a) et la partie complémentaire (31b) de l'arbre télescopique (31) étant accouplées ensemble de manière coulissante le long d'axes coïncidents respectifs (P, R) pour permettre un mouvement correspondant de translation entre les moyens de réglage (30) et les moyens de coupe (12) .

6. Module de coupe (1) selon la revendication 5, dans lequel la lame tournante (12) tourne autour d'un axe central (X) et l'arbre télescopique (31) est coaxial à l'axe central (X) des moyens de coupe (12), dans lequel le module de coupe (1) comprend au moins un manchon (50) entreposé entre l'arbre télescopique (31) et les moyens de coupe (12).

7. Module de coupe (1) selon la revendication 6, dans lequel l'arbre télescopique (31) et ledit au moins un manchon (50) ont des axes respectifs de symétrie (P, R) qui sont coaxiaux à l'axe central de rotation (X) de la lame de coupe (12).

8. Module de coupe (1) selon la revendication 2, dans lequel la lame de coupe (12) comprend un organe de support (12a) de préférence avec extension tronconique le long d'une direction d'extension coïncidant avec l'axe central de rotation (X), la lame de coupe (12) comprenant au moins une partie coupante (12b) disposée dans une partie périphérique de l'organe de support (12a) .

9. Module de coupe (1) selon la revendication 5, dans lequel les moyens de réglage (30) comprennent un moteur électrique (32) connecté par le biais d'un système de transmission de puissance à la partie complémentaire (31b) de l'arbre télescopique (30) des moyens de réglage (30), et dans lequel la partie (31a) de l'arbre télescopique (30) est configurée de sorte à convertir et à transmettre un mouvement de rotation de l'arbre télescopique (31) dans le mouvement correspondant de translation entre les moyens de réglage (30) et les moyens de coupe (12).

10. Module de coupe (1) selon la revendication 5, comprenant des moyens d'entraînement (60) et dans lequel l'élément de déplacement (40) est associé aux moyens d'entraînement (60), les moyens d'entraînement (60) de préférence comprenant un moteur électrique pour entraîner un chariot avec roues fixes et/ou une roue pivotante et/ou un chariot chenillé opérationnellement associés à l'élément de déplacement (40) dans une configuration opérationnelle pour utiliser le module de coupe (1).

11. Module de coupe (1) selon l'une quelconque des revendications 1-10, dans lequel la protection (70) est solidaire de la structure de support (10).

12. Module de coupe (1) selon l'une quelconque des revendications 1-11, dans lequel la structure de support (10) a une partie de raccordement (15) qui peut être attachée de façon réversible à une partie d'un châssis (210) d'une tondeuse-robot à gazon automatique (200) ou à une partie (310) d'une débrousailleuse manuelle (300), la structure de support (10) des moyens de coupe (12) de préférence ayant une partie bridée de raccordement (15) conçue pour former un raccordement réversible.

13. Tondeuse-robot à gazon (200) pour tailler les bordures d'herbes et pour couper le gazon, comprenant au moins :
- un châssis (210) comprenant au moins deux roues de support (220) ;
- un module de coupe (1) décrit dans les revendications 1-14.

14. Tondeuse-robot à gazon (200) selon la revendication 13, dans laquelle le module de coupe (1) est disposé à une extrémité frontale (200a) de la tondeuse-robot à gazon (200) par rapport à la direction et au sens prédéterminés d'avancement de la tondeuse-robot à gazon (200) dans une configuration opérationnelle d'utilisation de la tondeuse-robot à gazon (200).

15. Tondeuse-robot à gazon (200) selon la revendication 13 ou 14, comprenant trois points (220, 230) pour rester en appui sur une surface de terrain (100), dans laquelle deux points d'appui comprennent les roues d'appui (220) du châssis (210) et un troisième point d'appui (230) comprend un chariot avec roues fixes et/ou une roue pivotante et/ou un chariot chenillé de l'élément de déplacement (40).

16. Tondeuse-robot à gazon (200) selon l'une quelconque des revendications 13-15, comprenant un élément d'appui complémentaire (230) configuré pour empêcher le blocage du module de coupe (1) avec le terrain (100), l'élément d'appui complémentaire (230) étant fixé de façon réversible à une partie du module de coupe (1), de préférence l'élément d'appui complémentaire (230) étant fixé à la protection (70).

17. Tondeuse-robot à gazon (200) selon l'une quelconque des revendications 13-15, comprenant un élément d'appui complémentaire (230) configuré pour empêcher le blocage du module de coupe (1) avec le terrain (100), l'élément d'appui complémentaire (230) étant fixé de façon réversible à une partie du châssis (210) du robot (200), de préférence l'élément d'appui complémentaire (230) étant fixé de façon réversible au châssis (210) à l'extrémité frontale (220a).
